# EUROPEAN PATENT APPLICATION

(11) **EP 4 843 945 A1**
(43) Date of publication of application: **25.11.2026**
(21) Application number: 26300244.6
(22) Date of filing: 20.05.2026
(51) Int. Cl.: C01B 3/384, C01B 3/34

(54) **PRODUCT FIRING FOR STABLE OPERATION OF A HYDROGEN PLANT AT LOW OPERATION CAPACITIES**

(30) Priority: 22.05.2025 EP 25305738
(71) Applicant: Technip Energies France, 92741 Nanterre Cedex (FR)
(72) Inventor: JAIN, Prateek, 92741 Nanterre Cedex (FR); WIJNHAMER, Alexander, 92741 Nanterre Cedex (FR); DERAKHSHANI, Sayed, 92741 Nanterre Cedex (FR)
(74) Representative: Edson, Russell Gregory

(57) **Abstract**

In some embodiments, a hydrogen production system can implement product firing for stable operation at low operation capacities. The system can include a production subsystem in which a chemical reaction involves a heat input. An output of the production subsystem can include a combustible product. The production subsystem can include a predefined turndown capacity. The system can include a combustion subsystem having one or more burners arranged to heat the production subsystem by combusting a fuel. The system can include a first operating mode in which the fuel supplied to the combustion subsystem includes a fuel source other than the combustible product. Additionally, the system can include a second operating mode in which the fuel includes the combustible product. The system can operate in the first operating mode when operating at or above the predefined turndown capacity and in the second operating mode when operating below the predefined turndown capacity.

## Description

### Technical Field

The present disclosure relates generally to chemical processing and, more particularly (although not necessarily exclusively), to product firing for stable operation of a hydrogen plant at low operation capacities.

### Background

Hydrogen is an important chemical that may be used in a variety of industrial and transportation applications, such as part of a petrochemical complex. A common process to produce hydrogen is steam methane reforming where hydrogen is produced by reacting steam and methane. Variations in market situations, such as with respect to demand of the products produced by the petrochemical complex, can cause fluctuations in production of the petrochemical complex, thereby resulting in changes in hydrogen production rates.

### Summary

According to aspects of the present disclosure, a first hydrogen production system, a method of operating a hydrogen production system, and a second hydrogen production system are provided according to one or more of the following examples. As used below, any reference to a series of examples is to be understood as a reference to each of those examples disjunctively (e.g., "Examples 1-4" is to be understood as "Examples 1, 2, 3, or 4").

In an aspect of the present disclosure, there is provided a hydrogen production system. The hydrogen production system may comprise a production subsystem, an output of the production subsystem may comprise a combustible product, and the production subsystem may comprise a reformer unit arranged to produce the combustible product comprising hydrogen. The hydrogen production system may further comprise a steam subsystem comprising a fluid heating vessel. The hydrogen production system may further comprise a combustion subsystem comprising one or more burners arranged to heat the production subsystem and the fluid heating vessel of the steam subsystem by combusting a fuel supplied to the one or more burners. The hydrogen production system may comprise a first operating mode in which the fuel supplied to the one or more burners may comprise a fuel source other than the combustible product. The hydrogen production system may also comprise a second operating mode in which the fuel supplied to the one or more burners comprises at least a portion of the combustible product. The hydrogen production system may be arranged to operate in the first operating mode when a production rate of the combustible product is at or above a predefined threshold. The hydrogen production system may be arranged to operate in the second operating mode when the production rate of the combustible product may be below the predefined threshold.

The hydrogen production system may further comprise a product purification unit arranged to receive the output of the production subsystem and optionally produce a purified product stream by removing one or more chemical components from the output of the production subsystem.

The hydrogen production system may further be arranged to optionally provide a portion of the purified product stream to the combustion subsystem in the second operating mode as part of the fuel supplied to the one or more burners.

The hydrogen production system may further comprise one or more heat exchangers for transferring, or arranged to transfer, heat from the combustion subsystem to the steam subsystem.

The hydrogen production system may be arranged such that the steam subsystem generates an export steam.

The hydrogen production system may further comprise a heat recovery subsystem arranged to receive the output of the production subsystem. The heat recovery subsystem may be arranged to transfer heat from the output to the steam subsystem.

The hydrogen production system may further comprise a purification unit arranged to remove one or more components from a feed stream and produce a pre-treated stream.

The reformer unit may be arranged to receive the pre-treated stream.

In a further aspect of the present disclosure, a method of operating a hydrogen production system is provided. The method may comprise: outputting, by a production subsystem of the hydrogen production system, a combustible product comprising hydrogen, optionally the production subsystem comprises a reformer unit arranged to produce the combustible product. The method may further comprise heating, by a combustion subsystem of the hydrogen production system, the production subsystem and a fluid heating vessel of a steam subsystem by combusting a fuel supplied to one or more burners of the combustion subsystem. The method may further comprise operating the hydrogen production system in a first operating mode, in which the fuel supplied to the one or more burners may comprise a fuel source other than the combustible product. The first operating mode may be implemented when a production rate of the combustible product is at or above a predefined threshold. The method may further comprise operating the hydrogen production system in a second operating mode in which the fuel supplied to the one or more burners may comprise a portion of the combustible product. The second operating mode may be implemented when the production rate of the combustible product is below the predefined threshold.

The method may further comprise receiving, by a product purification unit, the output of the production subsystem and optionally producing a purified product stream by removing one or more chemical components from the output of the production subsystem.

A portion of the purified product stream may be provided to the combustion subsystem in the second operating mode as part of the fuel supplied to the one or more burners.

The fluid heating vessel of the steam subsystem may be heated in the second operating mode at least in part by heat generated by the combustion subsystem combusting at least a portion of the combustible product output by the production subsystem.

An output of the steam subsystem may comprise an export steam to be transported to an external system.

The method may further comprise transporting a remaining portion of the purified product stream to an external system.

In a further aspect of the present disclosure, a hydrogen production system is provided. The hydrogen production system may comprise: a production subsystem in which a chemical reaction involves a heat input, an output of the production subsystem comprising a combustible product, optionally the production subsystem comprises a predefined turndown capacity; a steam subsystem comprising a fluid heating vessel; a combustion subsystem comprising one or more burners arranged to heat the production subsystem and the fluid heating vessel of the steam subsystem by combusting a fuel supplied to the one or more burners; the hydrogen production system may comprise a first operating mode in which the fuel supplied to the one or more burners comprises a fuel source other than the combustible product, the hydrogen production system may operate in the first operating mode when the hydrogen production system is operating at or above the predefined turndown capacity; and the hydrogen production system may comprise a second operating mode in which the fuel supplied to the one or more burners comprises the combustible product, the hydrogen production system may operate in the second operating mode when the hydrogen production system is operating below the predefined turndown capacity.

The hydrogen production system may further comprise: a product purification unit arranged to receive the output of the production subsystem and produce a purified product stream by removing one or more chemical components from the output of the production subsystem.

Optionally, a portion of the purified product stream is provided to the combustion subsystem in the second operating mode as part of the fuel supplied to the one or more burners.

Optionally, the fluid heating vessel of the steam subsystem is heated in the second operating mode at least in part by heat generated by the combustion subsystem combusting at least a portion of the combustible product produced by the production subsystem.

Optionally, an output of the steam subsystem comprises an export steam to be transported to an external system.

Optionally, the predefined turndown capacity indicates a ratio between a maximum operation capacity and a minimum operation capacity of the production subsystem.

Optionally, the combustible product comprises hydrogen gas.

The hydrogen production system may further comprise a heat recovery subsystem arranged to receive the output of the production subsystem. Optionally, the heat recovery subsystem transfers heat from the output to the steam subsystem.

In a further aspect of the present disclosure, a method of operating a hydrogen production system is provided. The method may comprise: producing, by a production subsystem of the hydrogen production system, a combustible product as an output, the production subsystem implementing a chemical reaction sustained by a heat input and comprising a predefined turndown capacity; heating, by a combustion subsystem of the hydrogen production system, the production subsystem and a fluid heating vessel of a steam subsystem by combusting a fuel supplied to one or more burners of the combustion subsystem; operating the hydrogen production system in a first operating mode in which the fuel supplied to the one or more burners comprises a first fuel, the first operating mode implemented when the hydrogen production system is operating at or above the predefined turndown capacity; and operating the hydrogen production system in a second operating mode in which the fuel supplied to the one or more burners comprises the combustible product, the second operating mode implemented when the hydrogen production system is operating below the predefined turndown capacity.

The method may further comprise: receiving, by a product purification unit, the output of the production subsystem; and producing a purified product stream by removing one or more chemical components from the output of the production subsystem.

Optionally, a portion of the purified product stream is provided to the combustion subsystem in the second operating mode as part of the fuel supplied to the one or more burners.

Optionally, the fluid heating vessel of the steam subsystem is heated in the second operating mode at least in part by heat generated by the combustion subsystem combusting at least a portion of the combustible product produced by the production subsystem.

Optionally an output of the steam subsystem comprises an export steam to be transported to an external system.

Optionally, the predefined turndown capacity indicates a ratio between a maximum operation capacity and a minimum operation capacity of the production subsystem.

Optionally the combustible product comprises hydrogen gas.

In a further aspect of the present disclosure, a hydrogen production system is provided. The hydrogen production system may comprise: a production subsystem in which a chemical reaction involves a heat input, an output of the production subsystem comprising a combustible product, optionally the production subsystem outputs the combustible product at a production rate below a predefined threshold; a steam subsystem comprising a fluid heating vessel; and a combustion subsystem comprising one or more burners arranged to heat the production subsystem and the fluid heating vessel of the steam subsystem by combusting a fuel supplied to the one or more burners, the fuel comprising at least a portion of the combustible produced/outputted by the production subsystem.

The hydrogen production system may further comprise: a product purification unit arranged to receive the output of the production subsystem and produce a purified product stream by removing one or more chemical components from the output of the production subsystem.

Optionally, a portion of the purified product stream is provided to the combustion subsystem as part of the fuel supplied to the one or more burners.

Optionally, an output of the steam subsystem comprises an export steam to be transported to an external system.

Optionally, the combustible product comprises hydrogen gas.

This summary is not intended to identify key or essential features of the claimed subject matter, nor is it intended to be used in isolation to determine the scope of the claimed subject matter. The subject matter should be understood by reference to appropriate portions of the specification, any of the drawings, and the claims.

The foregoing, together with other features and examples, will become more apparent upon referring to the following specification, claims, and accompanying drawings.

### Brief Description of the Drawings

FIG. 1 is a block diagram of an example hydrogen production system implementing product firing for stable operation at low operation capacities according to some examples of the present disclosure.
FIG. 2 is a block diagram of an example syngas production system implementing product firing for stable operation at low operation capacities according to some examples of the present disclosure.
FIG. 3 is a flowchart of an example process for product firing for stable operation of a hydrogen production system at low operation capacities according to some examples of the present disclosure.

### Detailed Description

Certain aspects and examples of the present disclosure relate to product firing for stable operation of a hydrogen plant at low operation capacities. The hydrogen plant can include one or more pieces of equipment that can facilitate a production of hydrogen. Hydrogen plants that have a flexible range of operations are increasingly desirable, such as to handle fluctuations in demand, price of hydrogen, or supply by alternative (green) sources. A turndown capacity of a hydrogen plant can indicate its operational range by comparing a maximum operation capacity of the hydrogen plant to a minimum operation capacity of the hydrogen plant. Hydrogen plants typically have a lower limit of 30% turndown capacity. Consequently, implementing turndown capacities below 30% can cause instability in the hydrogen plant, such as deactivation of a steam reforming catalyst used to produce hydrogen. Product firing can include burning or combusting a product of the hydrogen plant, which can enable the pieces of equipment to operate within design parameters while reducing a hydrogen production rate of the overall hydrogen plant. For example, the design parameters of each piece of equipment can correspond to a respective operating range within which a risk of safety hazards is reduced or minimized. The product of the hydrogen plant can include hydrogen or synthesis gas (e.g., a gaseous mixture including carbon monoxide and hydrogen). The term 'hydrogen plant' in the context of the present disclosure can therefore include a production system such as the hydrogen production system and/or the syngas production system described herein. Synthesis gas is also referred to herein as syngas. Accordingly, a syngas production system as described herein may be considered a hydrogen production system. Further to this, the features described herein in relation to a hydrogen production system may also apply to a syngas production system.

In some implementations, the hydrogen plant can be part of an industrial facility. The hydrogen produced by the hydrogen plant can be used in various unit operations implemented in the industrial facility to produce one or more products outputted by the industrial facility. Additionally, the hydrogen plant can produce steam that can be exported or transferred for use in other chemical processes, such as being integrated into a steam system of the industrial facility. For example, the hydrogen plant can be part of a refinery or a petrochemical production complex that can use the steam exported by the hydrogen plant for heating, power generation, or to perform one or more unit operations.

In some examples, the hydrogen plant can include a combustion subsystem that can burn a fuel to generate heat. For instance, the heat can facilitate a reforming reaction to produce a product of the hydrogen plant, such as hydrogen gas. In some conventional systems, the combustion subsystem can receive its fuel from a fuel source other than the product produced by the hydrogen plant. The fuel source may be provided by a different system external to the hydrogen plant. For example, the fuel source can include hydrocarbons (e.g., natural gas, propane, butane, etc.) as the fuel source of the combustion system. In the systems and methods described herein, the product of the hydrogen plant can replace at least a portion of the fuel source provided to the combustion system. For example, the combustion system may burn hydrogen gas produced by the hydrogen plant as the fuel to generate heat. Burning hydrogen gas as fuel can reduce carbon emissions of the hydrogen plant, which can decrease a contribution of the hydrogen plant to global warming. Additionally, burning the product of the hydrogen plant as fuel can facilitate relatively high carbon capture rates. For example, the hydrogen plant can produce blue hydrogen or decarbonized hydrogen that can be manufactured by reforming natural gas and capturing carbon-containing compounds.

In some implementations, the systems described herein can implement heat exchange or heat recovery to use the heat generated by the combustion system in other processes, thereby reducing energy consumption or costs associated with additional heating. For example, the heat generated by the combustion system can be provided to a steam subsystem to generate steam by heating a fluid, such as water, to or past a boiling point. In some cases, the steam subsystem can include one or more containers or vessels including water that can be heated by the heat generated by the combustion system. As another example, the heat generated by the combustion system can be provided to facilitate the reforming reaction used to produce the product of the hydrogen plant.

In some implementations, the product firing of the hydrogen gas produced by the hydrogen plant can enable flexibility with respect to operation capacity of the pieces of equipment in the hydrogen plant. For example, a typical hydrogen plant may have a predefined threshold with respect to turndown capacity, such as a minimum turndown capacity of 30%. The turndown capacity can indicate an operating range of a piece of equipment or a set of equipment. For example, the turndown capacity of the hydrogen plant can correspond to a production rate of the hydrogen plant such as a hydrogen production rate or a production rate of combustible product. In some examples, as shown in the equation below, the turndown capacity can compare a maximum operation capacity (OCₘₐₓ) and a minimum operation capacity (OCₘᵢₙ). Each operation capacity can correspond to a respective production rate of the hydrogen plant (e.g., the hydrogen production rate or the production rate of combustible product). For example, the maximum operation capacity can correspond to a maximum production rate (e.g., a maximum hydrogen production rate or a maximum production rate of combustible product), while the minimum operation capacity can correspond to a minimum production rate (e.g., a minimum hydrogen production rate or a minimum production rate of combustible product). $Turndown capacity \left(%\right) = \frac{{OC}_{min}}{{OC}_{max}} \times 100$ Operating below the minimum turndown capacity can result in increased utility consumption and may cause instabilities in the hydrogen plant. For example, a flow rate of a steam methane reformer may be reduced, which can result in localized heating and can lead to catalyst deactivation or even equipment failure. By implementing product firing, the systems described herein can reduce the production rate (e.g., hydrogen production rate) below the minimum turndown capacity while enabling other pieces of equipment in the hydrogen plant to operate with a suitable operation range. Accordingly, the hydrogen plant can operate at a reduced production rate (e.g., hydrogen production rate) while ensuring safety of the hydrogen plant.

The turndown capacity of a hydrogen plant may alternatively be represented by its turndown ratio (otherwise referred to as rangeability in some instances). The turndown ratio of a hydrogen plant may be represented according to one of the following: $Turndown ratio = \frac{{OC}_{max}}{{OC}_{min}}$ $Turndown ratio = \frac{100}{Turndown capacity \left(%\right)}$

As a non-limiting example, the hydrogen plant described herein can be a grey hydrogen facility that can produce hydrogen using natural gas or methane without carbon capture or storage. Fluctuations in hydrogen production of the hydrogen plant can occur due to using a separate hydrogen source to replace at least a portion of the hydrogen production of the hydrogen plant. For example, a green hydrogen source can use electrolysis (e.g., high-temperature or high-pressure electrolysis of water) to produce hydrogen, which can result in lower carbon emissions compared to the grey hydrogen facility. Due to the hydrogen produced by the green hydrogen source replacing at least a portion of the hydrogen production of the hydrogen plant, the hydrogen plant may operate at a reduced production rate by implementing product firing. Accordingly, the systems and methods described herein can reduce hydrogen production while forgoing additional investment or resource consumption with respect to the existing grey hydrogen facility. In certain cases, the green hydrogen source may be implemented in phases, such as due to costs of building a new plant. The existing grey hydrogen facility can be an existing asset that can continue to produce hydrogen at a reduced production rate and can be used in conjunction with the green hydrogen source to meet decarbonization objectives. Additionally, by enabling different operation modes (e.g., with or without product firing), the existing hydrogen facility can accommodate fluctuations in hydrogen production that can result from ramp up or ramp down issues related to equipment of the green hydrogen source. For example, an electrolyzer of the green hydrogen source that implements electrolysis to produce hydrogen may ramp up during the day and ramp down during the night, which can cause changes in hydrogen production of the green hydrogen source.

In some implementations, the hydrogen plant can typically maintain a relatively constant ratio between hydrogen and steam produced by the hydrogen plant. The hydrogen plant can export or transport at least a portion of the steam to an external network. The portion of the steam transported to the external network can be referred to as export steam. In some examples, a decrease in hydrogen production may be desirable while usage or demand of steam may be maintained. Certain conventional processes to achieve a relatively high steam export at a lower turndown capacity can involve adjusting or adding design requirements that can be costly in terms of resource consumption or capital expenditure. For example, margins in air pre-heat bypass may be adjusted, which can lead to bypassing the air pre-heat. As another example, adjustments to design requirements can include provisioning auxiliary firing in a flue gas duct, which may involve implementing additional burners in the flue gas duct and can increase design complexity. In contrast, the hydrogen plants or production systems described herein implement little to no adjustments to design requirements or parameters of plant equipment while ensuring flexibility with respect to a ratio between steam export and hydrogen production. As described herein, switching the hydrogen plant to an operation mode that implements product firing can be beneficial to continue providing a suitable quantity of steam while reducing the production of hydrogen. Accordingly, using product firing, the steam subsystem can maintain a similar amount of export steam while the hydrogen plant operates at the reduced hydrogen production rate.

Illustrative examples are given to introduce the reader to the general subject matter discussed herein and are not intended to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

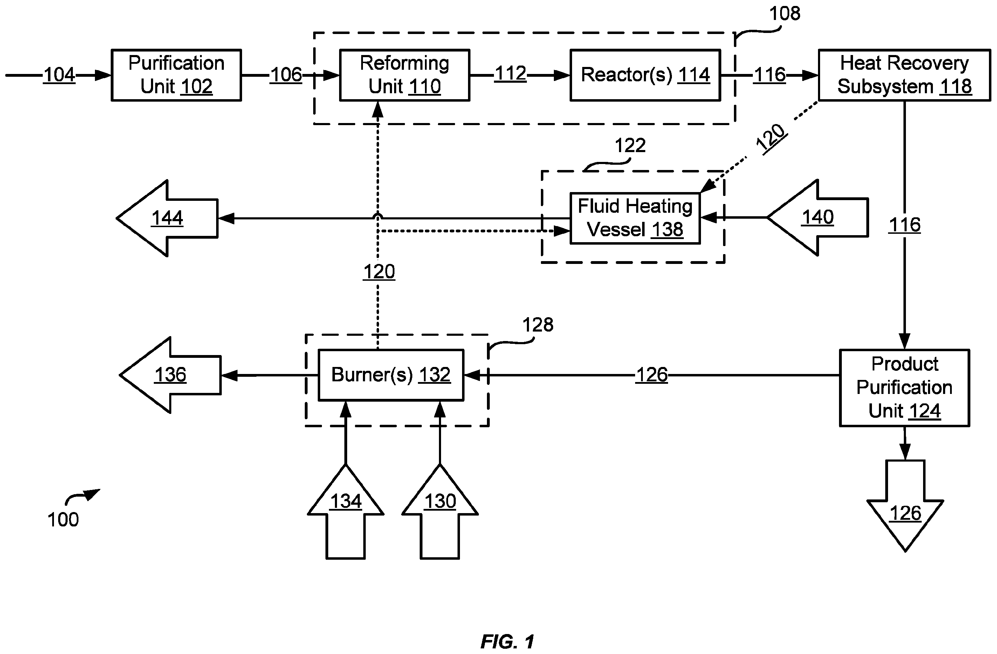

FIG. 1 is a block diagram of an example hydrogen production system 100 implementing product firing for stable operation at low operation capacities according to some examples of the present disclosure. The hydrogen production system 100 can include one or more pieces of equipment or one or more subsystems that can facilitate hydrogen production. As described herein, the hydrogen production system 100 can implement product firing by burning or combusting at least a portion of its product (e.g., hydrogen or a hydrogen-containing mixture, which is an example of a combustible product of the system). Although FIG. 1 shows a specific arrangement of units and subsystems, it will be appreciated that other or additional suitable components, subsystems, arrangements and the like are possible with respect to the hydrogen production system 100.

In the example of FIG. 1, the hydrogen production system 100 can include a purification unit 102 that can purify a feed stream 104 by removing one or more impurities from the feed stream 104. The feed stream 104 can include one or more hydrocarbons (e.g., methane, natural gas, propane, etc.) or other suitable feeds (e.g., ethanol, gasoline, etc.) that can undergo one or more chemical reactions in one or more pieces of equipment positioned downstream from the purification unit 102 to produce hydrogen. Non-limiting examples of the impurities include sulfur, halogens (e.g., chlorides), and mercury. In some implementations, the impurities removed by the purification unit 102 can include chemicals or compounds that can damage catalysts that can be used in the equipment positioned downstream from the purification unit 102. The purification unit 102 can output a pre-treated stream 106 in which the impurities are reduced or removed. For example, the purification unit 102 can remove the impurities from the feed stream 104 such that an amount (e.g., concentration) of the impurities in the pre-treated stream 106 is below a predefined threshold.

In the example of FIG. 1, a production subsystem 108 can receive the feed stream 104 or a stream derived therefrom, such as the pre-treated stream 106 and generate an output including hydrogen. As shown, the production subsystem 108 can include a reforming unit 110 that can receive the feed stream 104 or a stream derived therefrom, such as the pre-treated stream 106 outputted by the purification unit 102. The reforming unit 110 can be referred to as a reformer. The reforming unit may be arranged to produce a combustible product. The combustible product may comprise hydrogen. The reforming unit 110 can perform a reforming process in which the one or more hydrocarbons of the feed stream 104 or pre-treated stream 106 are reacted with another reactant (e.g., oxygen gas and/or steam) to produce a reformer effluent 112. In any embodiment, the combustible product comprises the reformer effluent 112. In general, steam reforming processes are endothermic such that heat is supplied to perform the reforming processes. For example, steam-methane reforming can involve reacting methane with high-temperature steam in a presence of a catalyst to produce hydrogen, carbon monoxide, and carbon dioxide. In some implementations, the high-temperature steam can be at a temperature up to 400°C (e.g., from 300°C to 400°C, from 350°C to 400°C, or from 375°C to 400°C). In some examples, the reformer effluent 112 can include one or more gases, such as carbon monoxide or hydrogen. As described herein, a gaseous mixture including carbon monoxide and hydrogen can be referred to as synthesis gas or syngas. The reformer effluent 112 may also include unreacted light hydrocarbons, carbon dioxide, water, other byproducts, or a combination thereof. Examples of the reforming process can include pre-reforming, steam methane reforming, dry methane reforming, autothermal reforming, partial oxidation, recuperative reforming, and the like.

As shown in FIG. 1, the production subsystem 108 can include one or more reactors 114 that can receive the reformer effluent 112 produced by the reforming unit 110. The reactors 114 can perform a water-gas shift (WGS) reaction using carbon monoxide and water of the reformer effluent 112 as reactants to form carbon dioxide and hydrogen. An output of the reactors 114 can be referred to as reactor effluent 116. In any embodiment, the combustible product may comprise the reactor effluent 116. In some examples, the WGS reaction can be performed in a presence of a catalyst. The WGS reaction can be at least one of a high temperature shift, a medium temperature shift, a low temperature shift, or an isothermal shift. In some examples, the reformer effluent 112 can be at an elevated temperature, such as exiting the reforming unit 110 at an outlet temperature of 1000°C or greater. In some examples, the outlet temperature may range from 1000°C to 1050°C. For example, the outlet temperature can be 1000°C, 1010°C, 1020°C, 1030°C, 1040°C, 1050°C, or anywhere in between. In some examples, the reformer effluent 112 can supply heat for the WGS reaction or other chemical reactions performed in the production subsystem 108.

An output of the production subsystem 108 may comprise the combustible product. The output of the production subsystem may vary depending on whether the production subsystem 108 comprises the reforming unit 110 and/or the reactor(s) 114. In the example of FIG. 1, the production subsystem 108 comprises the reforming unit 110 and the reactor(s) 114 described herein. Accordingly, the output of the production subsystem 108, such as the combustible product, may comprise the reformer effluent 112 and/or the reactor effluent 116. However, it should be appreciated that the combustible product may comprise the reformer effluent 112. In the example of FIG. 1, the reactor effluent 116 produced by the reactors 114 can be transported to a heat recovery subsystem 118 of the hydrogen production system 100. As an example, the heat recovery subsystem 118 can include one or more heat exchangers that can transfer heat 120 from the reactor effluent 116 to another fluid, thereby recovering the heat 120 from the reactor effluent 116. In some implementations, the heat recovery subsystem 118 can transfer the heat 120 obtained or recovered from the reactor effluent 116 to a steam subsystem 122 of the hydrogen production system 100. For example, the other fluid to which the heat 120 is transferred can be used to provide the heat 120 to the steam subsystem 122, such as via another heat exchange system corresponding to the steam subsystem 122. Additional description related to the steam subsystem 122 is provided below. Once the heat 120 is recovered from the reactor effluent 116, the heat recovery subsystem 118 can transfer the reactor effluent 116 to a downstream component, such as a product purification unit 124. In any embodiment, an output of the production subsystem 108 may be routed to the heat recovery subsystem 118. Accordingly, reference to the reactor effluent 116 above may instead be to the output of the production subsystem 108.

In the example of FIG. 1, the product purification unit 124 can receive the reactor effluent 116 from the heat recovery subsystem 118. Additionally or alternatively, the product purification unit 124 can receive the reactor effluent 116 directly from the production subsystem 108. The product purification unit 124 can use one or more separation techniques to remove one or more impurities or undesirable components from the reactor effluent 116 to produce a purified product stream 126. As an example, the product purification unit 124 can implement adsorption (e.g., pressure-swing adsorption) to remove carbon dioxide or other impurities from the reactor effluent 116. In the example of FIG. 1, at least a portion of the purified product stream 126 can be provided to a combustion subsystem 128 that can combust a fuel. The fuel provided to the combustion subsystem 128 can be referred to as make-up fuel. For example, the combustion subsystem 128 combusting hydrogen provided in the purified product stream 126 can generate heat 120. In some implementations, a remaining portion of the purified product stream 126 can be transported to an external system, such as for sale, heating, or to use in a unit operation. In some examples, the hydrogen production system 100 can include a control system that can be used to adjust a quantity (e.g., ratio or percentage) of the purified product stream 126 provided to the combustion subsystem 128. By way of example, the control system can include one or more valves or other suitable control devices that can be adjusted to change the quantity of the purified product stream 126 provided to the combustion subsystem 128. In any embodiment, the product purification unit 124 may receive an output of the production subsystem 108 (e.g., without entering the reactor(s) 114 and/or heat recovery subsystem 118 first). Accordingly, reference to the reactor effluent 116 above may instead be to the output of the production subsystem 108.

In some examples, a hydrogen production rate of the hydrogen production system 100 may vary, such as due to a price of or demand for hydrogen. Decreasing the hydrogen production rate can modify a turndown capacity at which the hydrogen production system 100 operates. As an example, the turndown capacity can indicate an operational range of the hydrogen production system 100 that can be defined by a minimum operation capacity and a maximum operation capacity of the hydrogen production system 100. In certain aspects, the operation capacity of the hydrogen production system 100 can correspond to a hydrogen production rate of the hydrogen production system 100 or a flow rate of a suitable output stream (e.g., the purified product stream 126). In some implementations, the hydrogen production system 100 can implement product firing, which can ensure stability of the hydrogen production system 100 while reducing the hydrogen production rate of the hydrogen production system 100. By way of example, during a design phase, the hydrogen production system 100 may have been configured to have a minimum turndown capacity (e.g., 30%), which can define or correspond to a minimum hydrogen production rate or minimum production rate of combustible product.

Operating the hydrogen production system 100 below the minimum turndown capacity, the minimum hydrogen production rate, or the minimum production rate of combustible product can cause safety hazards if product firing is forgone. Accordingly, the hydrogen production system 100 can operate in different operating modes based on the minimum turndown capacity or another suitable threshold (e.g., a hydrogen product rate or a production rate of combustible product). For example, in a first operating mode, the hydrogen production system 100 can forgo product firing and instead provide a fuel source 130 other than the combustible product and/or hydrogen produced by the hydrogen production system 100 to the combustion subsystem 128. The fuel source 130 can include hydrocarbons, natural gas, etc. In particular, the fuel source 130 may lack or be substantially free from a product of the hydrogen production system 100. Additionally, the fuel source 130 can be provided by a different source or system external to the hydrogen production system 100. As another example, in a second operating mode, the hydrogen production system 100 can implement product firing such that the fuel combusted by the combustion subsystem 128 can include the combustible product and/or hydrogen produced by the hydrogen production system 100. For example, the combustible product and/or hydrogen can be provided to the combustion subsystem 128 via the purified product stream 126. The hydrogen production system 100 may be arranged to operate in the first operating mode when a production rate of the combustible product is at or above a predefined threshold, and in the second operating mode when the production rate of the combustible product is below the predefined threshold.

In some examples, operating the hydrogen production system 100 below the minimum turndown capacity or the minimum hydrogen production rate can cause certain pieces of equipment to deteriorate or malfunction. For example, the product purification unit 124 may be unable to maintain a design hydrogen recovery rate (e.g., a recovery rate ranging from 87% to 90%). Consequently, a higher amount of hydrogen may be included in a purge gas of the product purification unit 124, which can lead to instability in reformer firing. As another example, the reforming unit 110 can be configured or designed to have a minimum flow rate to ensure suitable flow distribution and temperature distribution. Operating the hydrogen production system 100 below the minimum turndown capacity, the minimum hydrogen production rate, or the minimum production rate of combustible product can cause the reforming unit 110 to operate below the minimum flow rate, which can result in localized heating. This inhomogeneous heating of the reforming unit 110 can lead to catalyst deactivation (e.g., due to sintering or carbon formation) and possibly degradation of the reforming unit 110. Implementing product firing can enable the pieces of equipment in the hydrogen production system 100 to operate within certain design parameters while decreasing the hydrogen production rate, thereby minimizing a likelihood of equipment failure or accelerated deterioration. For example, the design parameters in the first operating mode and the second operating mode can be within the same range despite a difference in turndown capacity of the operating modes.

In the example of FIG. 1, the combustion subsystem 128 can include one or more burners 132 that can receive and combust the fuel. In some implementations, a respective portion of the burners 132 can be configured, designed, or selected to be compatible with the combustible product, hydrogen or the fuel source 130 as the fuel. In the different operating modes, the fuel supplied to the burners 132 can vary. For example, the fuel supplied in the first operating mode can include the fuel source 130 and may be substantially free from the combustible product and/or hydrogen. In contrast, the fuel supplied in the second operating mode can include the combustible product and/or hydrogen produced by the production subsystem 108. In some implementations, valves or other suitable control devices can be adjusted based on the operating mode of the hydrogen production system 100 to modify which fuel is supplied to the burners 132.

In general, the combustion subsystem 128 can receive combustion air 134 that can be provided to the burners 132 to facilitate the combustion of the fuel. For example, the combustion can involve a chemical reaction between the fuel (e.g., hydrogen or the fuel source 130) and an oxidant (e.g., oxygen provided as part of the combustion air 134). In the example of FIG. 1, the combustion can produce flue gas 136 and heat 120. The flue gas 136 can include reaction products of combusting the fuel and the combustion air 134. Additionally, the flue gas 136 can include residual components, such as particulate matter, water vapor, etc. In some examples, the flue gas 136 can also be referred to as exhaust gas or stack gas.

In some examples, the heat 120 generated by the combustion subsystem 128 can be provided to one or more other components of the hydrogen production system 100. Transferring the heat 120 for use in another unit operation can be part of heat integration to reduce energy consumption and costs. By way of example, the hydrogen production system 100 can include one or more heat exchangers to facilitate heat transfer between two fluids to transfer the heat 120 from the combustion subsystem to another component of the hydrogen production system 100. In the example of FIG. 1, at least a portion of the heat 120 produced by the combustion subsystem 128 can be provided to the steam subsystem 122 of the hydrogen production system 100. As described, additionally or alternatively, the steam subsystem 122 can receive the heat 120 recovered by the heat recovery subsystem 118. The steam subsystem 122 can include a fluid heating vessel 138 that can receive or contain a fluid (e.g., water 140). The heat 120 from the combustion subsystem 128 or the heat 120 from the heat recovery subsystem 118 can increase a temperature of the fluid in the fluid heating vessel 138 of the steam subsystem 122 to generate steam 144. In some implementations, the steam 144 can be water 140 in a gaseous phase (e.g., water vapor) and may include water droplets suspended in air. In some examples, product firing implemented in the second operating mode can enable similar steam production rates between the first operating mode and the second operating mode. In some implementations, the steam 144 can be referred to as export steam. In particular, the steam 144 can be transported to another system or another suitable component in the hydrogen production system 100. By way of example, the hydrogen production system can be part of a refinery, such as to produce hydrogen that can reduce a sulfur content of diesel fuel produced at the refinery. Usage of the steam 144 in the refinery can include temperature regulation to ensure that certain chemical compounds of the refinery can be maintained within a specific viscosity range.

In the example of FIG. 1, at least a portion of the heat 120 generated by the combustion subsystem 128 can be provided to the reforming unit 110. As described herein, the reforming unit 110 can perform a reforming process that is endothermic. Accordingly, the heat 120 from the combustion subsystem 128 can facilitate the reforming process of the reforming unit 110. Although the heat 120 from the combustion subsystem 128 is shown in FIG. 1 as being provided to the reforming unit 110 and the fluid heating vessel 138, it will be appreciated that other components in the hydrogen production system 100 may receive at least a portion of the heat 120 from the combustion subsystem 128 or the heat recovery subsystem 118. For example, the hydrogen production system 100 can include a fired heater (not pictured) that can be positioned upstream from the reactors 114 of the production subsystem 108. The fired heater can receive at least a portion of the heat 120 produced by the combustion subsystem 128.

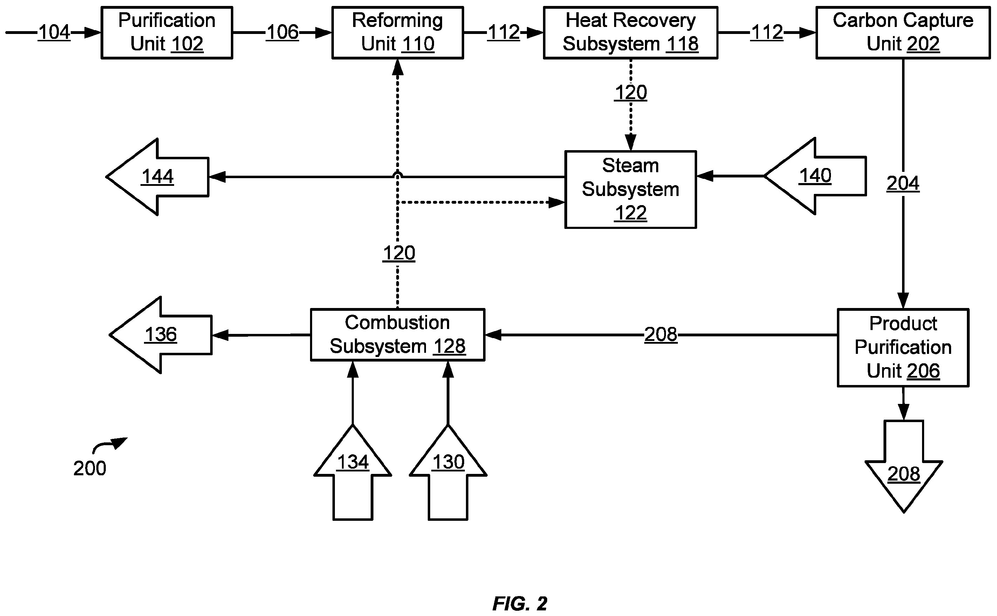

FIG. 2 is a block diagram of an example syngas production system 200 implementing product firing for stable operation at low operation capacities according to some examples of the present disclosure. The syngas production system 200 can include one or more pieces of equipment or one or more subsystems that can facilitate syngas production. The syngas production system 200 can produce syngas that can include a mixture of carbon monoxide and hydrogen. As described herein, the syngas production system 200 can implement product firing by burning or combusting at least a portion of its product. In some examples, the pieces of equipment or the subsystems of the syngas production system 200 can be similar to or the same as components described above with respect to the hydrogen production system 100 of FIG. 1. Certain aspects of FIG. 2 are described with reference to components of FIG. 1. Although FIG. 2 shows a specific arrangement of units and subsystems, it will be appreciated that other or additional suitable components, subsystems, arrangements and the like are possible with respect to the syngas production system 200.

In the example of FIG. 2, the syngas production system 200 can include a purification unit 102 that can receive a feed stream 104 that can include one or more hydrocarbons or other suitable fuels. Non-limiting examples of components of the feed stream 104 can include methane, gasoline, ethanol, natural gas, propane, etc. As described herein, the purification unit 102 can remove one or more chemical components from the feed stream 104 to produce a pre-treated stream 106 in which the chemical components are removed or reduced. In particular, the purification unit 102 may remove impurities, such as sulfur, halogens (e.g., chlorides), or mercury, that may damage other pieces of equipment in the syngas production system 200 that are positioned downstream from the purification unit 102. For example, as described herein, a production subsystem can perform one or more unit operations involving catalysts that can be poisoned or rendered less effective by certain impurities that can be present in the feed stream 104. The purification unit 102 can remove or reduce such impurities to minimize damage to the catalysts.

In the example of FIG. 2, a reforming unit 110 can receive the feed stream 104 or a stream derived therefrom, such as the pre-treated stream 106 outputted by the purification unit 102. The reforming unit 110 may be the same as that described above in relation to FIG. 1. Accordingly, the reforming unit 100 may be arranged to output a combustible product. As described herein, the reforming unit 110 can use the hydrocarbons included in the pre-treated stream 106 to generate an output including hydrogen. In particular, the reforming unit 110 can use the hydrocarbons as a reactant in a reforming reaction. For example, in a steam reforming reaction, the hydrocarbons can react with water in the form of steam to generate syngas that can include a mixture of carbon monoxide and hydrogen. As another example, the reforming unit 110 can implement partial oxidation in which the hydrocarbons are reacted with oxygen to form hydrogen and carbon monoxide. In some examples, unreacted hydrocarbons, water, or other compounds in the pre-treated stream 106 may be present in the output of the reforming unit 110. The output of the reforming unit 110 can be referred to as reformer effluent 112.

In the example of FIG. 2, a heat recovery subsystem 118 can be positioned downstream from the reforming unit 110. The heat recovery subsystem 118 may be the same as, or may at least comprise one or more features of, that described above in relation to FIG. 1. For example, the heat recovery subsystem 118 can receive the reformer effluent 112 outputted by the reforming unit 110. Once the heat recovery subsystem 118 receives the reformer effluent 112, the heat recovery subsystem 118 can remove or otherwise recover heat 120 from the reformer effluent 112. In the example of FIG. 2, the heat 120 recovered by the heat recovery subsystem 118 from the reformer effluent 112 can be transferred or otherwise provided to a steam subsystem 122 that can generate steam 144 using the heat 120.

In the example of FIG. 2, the syngas production system 200 can include a carbon capture unit 202 that can receive the reformer effluent 112 and output a carbon-reduced stream 204. The carbon capture unit 202 can remove one or more carbon-containing components from the reformer effluent 112. Accordingly, the carbon-reduced stream 204 can have a reduced carbon content compared to the reformer effluent 112. Non-limiting examples of the carbon-containing components can include carbon dioxide and hydrocarbons (e.g., unreacted hydrocarbons of the feed stream 104). In some implementations, as shown, the carbon capture unit 202 can receive the reformer effluent 112 from the heat recovery subsystem 118, such as after the heat recovery subsystem 118 has transferred the heat 120 from the reformer effluent 112. Additionally or alternatively, the carbon capture unit 202 can receive the reformer effluent 112 directly from the reforming unit 110.

In the example of FIG. 2, a product purification unit 206 can receive the carbon-reduced stream 204 outputted by the carbon capture unit 202. The product purification unit 206 can remove one or more impurities or undesirable components from the carbon-reduced stream 204 to produce a purified product stream 208 including a mixture of hydrogen and carbon monoxide (e.g., syngas). As an example, the product purification unit 206 can implement any suitable separation techniques (e.g., absorption, adsorption, cryogenics, membranes, etc.) to remove any remaining carbon dioxide or other impurities from the carbon-reduced stream 204. The product purification unit 206 may comprise the same features as, or may at least comprise one or more features of, and thus at least partially correspond with, the product purification unit 124 described in relation to FIG. 1. In any embodiment, the product purification unit 206 may receive an output of the reforming unit 110 (e.g., without entering the heat recovery subsystem 118 and/or the carbon capture unit 202 first). Accordingly, reference to the carbon-reduced stream 204 above may instead be to the output of the reforming unit 110.

In the example of FIG. 2, at least a portion of the purified product stream 208 can be provided to a combustion subsystem 128 that can combust a fuel. The fuel provided to the combustion subsystem 128 can be referred to as make-up fuel. For example, the combustion subsystem 128 combusting hydrogen provided in the purified product stream 208 can generate heat 120. In some implementations, a remaining portion of the purified product stream 208 can be transported to an external system that may use the purified product stream 208 as fuel or in other unit operations.

As described herein, the fuel supplied to the combustion subsystem 128 can vary based on an operating mode of the syngas production system 200. The operating mode can correspond to a predefined turndown capacity of the syngas production system 200. By way of example, the predefined turndown capacity can be a numeric value (e.g., a decimal, percentage, etc.) that can indicate a ratio between a maximum operation capacity and a minimum operation capacity of the syngas production system 200. The maximum operation capacity can correspond to a maximum production rate of the syngas production system 200, and the minimum operation capacity can correspond to a minimum production rate of the syngas production system 200. As an example, a production rate of combustible product or a syngas production rate of the syngas production system 200 can correspond to a flow rate of the purified product stream 208.

In some implementations, a first operating mode can correspond to the syngas production system 200 operating at or above the predefined turndown capacity. In the first operating mode, the fuel can include a fuel source 130 other than a combustible product (e.g., syngas or hydrogen) produced by the syngas production system 200. The fuel source 130 can include hydrocarbons, natural gas, or other suitable fuels. In some implementations, a second operating mode can correspond to the syngas production system 200 operating below the predefined turndown capacity. In the second operating mode, the fuel combusted by the combustion subsystem 128 can include the combustible product (e.g., syngas or hydrogen) produced by the syngas production system 200. As shown in FIG. 2, syngas produced by the reforming unit 110 can be provided as fuel to the combustion subsystem 128 via the purified product stream 208 when the syngas production system 200 operates in the second operating mode.

In the example of FIG. 2, the combustion subsystem 128 can include one or more burners that can be configured or selected to be compatible with syngas as the fuel for combustion. By way of example, the combustion subsystem 128 can have a first subset of burners compatible with the fuel source 130 and a second subset of burners compatible with syngas. A control system can control or adjust a fuel supply to the burners based on the operating mode of the syngas production system 200. For example, the control system can include one or more values or other suitable control devices that can be adjusted to direct the fuel to the first subset of burners when operating in the first operating mode. Conversely, when the syngas production system 200 is operating in the second operating mode, the control system can direct the fuel to the second subset of burners.

In general, the combustion subsystem 128 can receive combustion air 134 that can be provided to the burners to combust the fuel, thereby generating heat 120. In particular, the combustion can involve a chemical reaction between the fuel (e.g., combustible product or syngas) and an oxidant (e.g., oxygen provided as part of the combustion air 134). In the example of FIG. 2, the combustion of the fuel can produce flue gas 136 and heat 120. The flue gas 136 can include reaction products of combusting the fuel and the combustion air 134. Additionally, the flue gas 136 can include residual components, such as particulate matter, water vapor, nitrogen gas, etc. A composition of the flue gas 136 may vary based on the fuel supplied to the burners.

In some examples, the heat 120 generated by the combustion subsystem 128 can undergo heat exchange or heat integration such that the heat 120 can be provided to one or more other components of the syngas production system 200. Accordingly, the heat 120 from the combustion subsystem 128 can be used in other unit operations of the syngas production system 200. In some implementations, at least a portion of the heat 120 produced by the combustion subsystem 128 can be provided to the steam subsystem 122 of the syngas production system 200. In the example of FIG. 2, the steam subsystem 122 can receive at least a portion of the heat 120 recovered by the heat recovery subsystem 118. The steam subsystem 122 can include a fluid heating vessel that can receive or contain a fluid (e.g., water 140). The heat 120 from the combustion subsystem 128 or the heat 120 from the heat recovery subsystem 118 can cause the fluid in the fluid heating vessel to vaporize, thereby generating steam 144. In some implementations, the steam 144 can be referred to as export steam. In particular, the syngas production system 200 can export the steam 144 to another system or another suitable component in the syngas production system 200. For example, the syngas production system can be part of a refinery, such as a natural gas refinery or a petroleum refinery. The steam 144 can be used to provide heat to perform other unit operations, such as a WGS reaction.

In the example of FIG. 2, at least a portion of the heat 120 generated by the combustion subsystem 128 can be provided to the reforming unit 110. As described herein, the reforming unit 110 can perform a reforming reaction that is endothermic. Supplying heat 120 to the reforming unit 110 can facilitate the reforming reaction of the reforming unit 110 such that certain reaction products (e.g., carbon monoxide and hydrogen) are favored. Although the heat 120 from the combustion subsystem 128 is shown in FIG. 2 as being provided to the reforming unit 110 and the fluid heating vessel, it will be appreciated that other components in the syngas production system 200 may receive at least a portion of the heat 120 from the combustion subsystem 128 or the heat recovery subsystem 118.

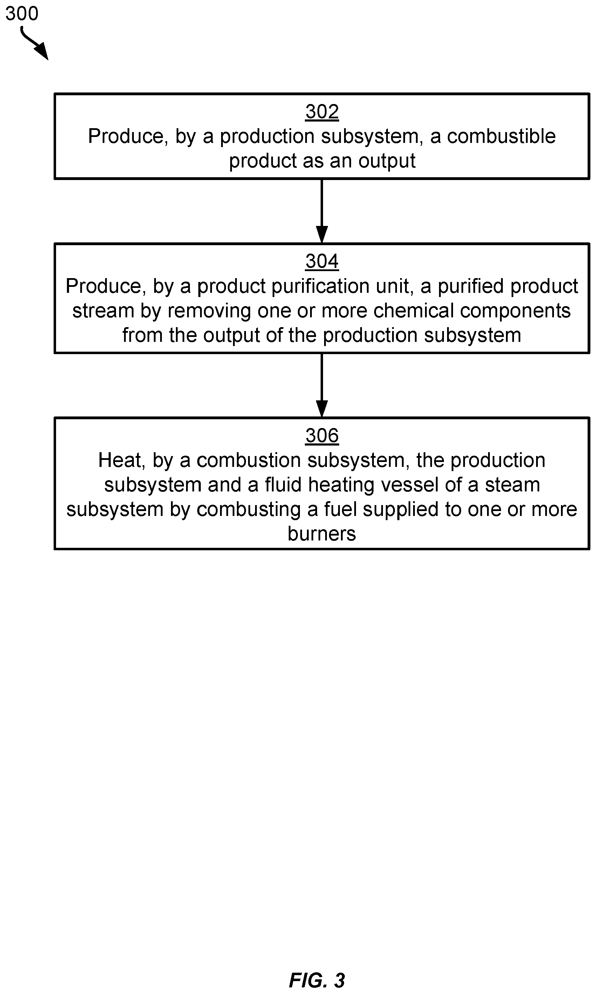

FIG. 3 is a flowchart of an example process 300 for product firing for stable operation of a hydrogen production system (e.g., the hydrogen production system 100 of FIG. 1 or the syngas production system 200 of FIG. 2) at low operation capacities according to some examples of the present disclosure. The steps of FIG. 3 are described below with reference to components discussed above in FIGS. 1-2. In some examples, more steps, fewer steps, different steps, or a different order of the steps depicted in FIG. 3 may be performed. Reference to the hydrogen production system below in the context of process 300 may instead be to the syngas production system.

At block 302, a production subsystem 108 of the hydrogen production system produces a combustible product (e.g., hydrogen or syngas) as an output. The production subsystem 108 can sustain a chemical reaction using a heat input. In some examples, at least a portion of the heat input provided to the production subsystem 108 can include heat 120 generated by combusting the combustible product. In some examples, the production subsystem 108 can include a reforming unit 110 that can convert hydrocarbons or other suitable fuel into a mixture of hydrogen and carbon monoxide. In some examples, the production subsystem 108 can include one or more reactors 114 that can react carbon monoxide produced by the reforming unit 110 with steam to produce carbon dioxide and hydrogen. The hydrogen produced by the reforming unit 110 can pass through the reactors 114 unreacted. Accordingly, the output (e.g., a reactor effluent 116) of the production subsystem 108 can be a hydrogen-rich stream. For example, the output of the production subsystem 108 can be enriched in hydrogen compared to an input to the reforming unit 110.

At block 304, a product purification unit produces a purified product stream by removing one or more chemical components from the output of the production subsystem 108 (e.g., the combustible product). The product purification unit can be the product purification unit 124 of FIG. 1 or the product purification unit 206 of FIG. 2. In some examples, the product purification unit can be configured to remove the chemical components to increase a concentration of hydrogen or syngas to produce the purified product stream. For example, the purified product stream can be enriched in hydrogen (e.g., have a higher concentration) compared to the output of the production subsystem 108. In some implementations, the product purification unit can apply one or more separation techniques to produce the purified product stream. For example, the product purification unit can include a pressure-swing absorption unit that can use pressure-swing absorption to remove carbon dioxide and other components from the output of the production subsystem 108. As another example, the product purification unit can include a set of membranes arranged in series and selected to remove certain components from the output of the production subsystem 108. In some implementations, at least a portion of the purified product stream can be provided to another component of the hydrogen production system.

At block 306, a combustion subsystem 128 of the hydrogen production system heats the production subsystem 108 and a fluid heating vessel 138 of a steam subsystem 122 by combusting a fuel supplied to one or more burners 132 of the combustion subsystem 128. Heat 120 generated by the combustion subsystem 128 can facilitate one or more unit operations of the hydrogen production system. For examples, the combustion subsystem 128 can supply heat 120 to facilitate a reforming reaction performed by the reforming unit 110. Additionally, the heat 120 generated by the combustion subsystem 128 can result in steam generation at the fluid heating vessel 138 of the steam subsystem 122.

As described herein, the combustion subsystem 128 can implement product firing by combusting at least a portion of the purified product stream as the fuel of the burners 132. In some implementations, the hydrogen production system can operate in a first operating mode that forgoes product firing or in a second operating mode that implements product firing. The operating mode of the hydrogen production system can depend on whether the hydrogen production system is operating at a turndown capacity at or above a predefined threshold. For example, the hydrogen production system can operate in the first operating mode when the predefined threshold is met or exceeded (e.g., when a production rate associated with the hydrogen production system is at or above a predefined threshold). In contrast, the hydrogen production system can operate in the second operating mode when the turndown capacity is below the predefined threshold (e.g., when a production rate associated with the hydrogen production system is below the predefined threshold).

Based on the operating mode or the turndown capacity, the combustion subsystem 128 can receive a different fuel. For example, in the first operating mode, the combustion subsystem 128 can receive a fuel source 130 that can lack any combustible product produced by the hydrogen production system. In some implementations, the fuel source 130 can be obtained from an external source remote from the hydrogen production system. As another example, in the second operating mode, the combustion subsystem 128 can receive at least a portion of the combustible product and/or at least a portion of the purified product stream outputted by the product purification unit. In some implementations, at least a subset of the burners 132 can be designed or selected to use the combustible product, hydrogen or syngas as the fuel. Certain design parameters may vary between a portion of the burners 132 designed to combust hydrogen or syngas and another portion of the burners 132 designed to combust the fuel source 130. Non-limiting examples of the design parameters can include a fuel inlet rate, a fuel nozzle or port configuration, a combustion air flow rate, etc. The design parameters can differ at least in part due to differences in energy content or viscosity between the purified product stream and the fuel source 130.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A hydrogen production system (100) comprising:
a production subsystem (108), an output of the production subsystem comprising a combustible product, wherein the production subsystem comprises a reformer unit (110) arranged to produce the combustible product comprising hydrogen;
a steam subsystem (122) comprising a fluid heating vessel (138);
a combustion subsystem (128) comprising one or more burners (132) arranged to heat the production subsystem and the fluid heating vessel of the steam subsystem by combusting a fuel supplied to the one or more burners;
a first operating mode in which the fuel supplied to the one or more burners comprises a fuel source other than the combustible product; and
a second operating mode in which the fuel supplied to the one or more burners comprises at least a portion of the combustible product, wherein the hydrogen production system is arranged to operate:
(a) in the first operating mode when a production rate of the combustible product is at or above a predefined threshold; and
(b) in the second operating mode when the production rate of the combustible product is below the predefined threshold.

2. The hydrogen production system of claim 1, further comprising:
a product purification unit arranged to receive the output of the production subsystem and produce a purified product stream by removing one or more chemical components from the output of the production subsystem.

3. The hydrogen production system of claim 2, further arranged to provide a portion of the purified product stream to the combustion subsystem in the second operating mode as part of the fuel supplied to the one or more burners.

4. The hydrogen production system of any of claims 1-3, further comprising one or more heat exchangers arranged to transfer heat from the combustion subsystem to a steam subsystem (122).

5. The hydrogen production system of any of claims 1-4, wherein the steam subsystem is arranged to generate an export steam.

6. The hydrogen production system of any of claims 1-5, further comprising a heat recovery subsystem (118) arranged to receive the output of the production subsystem, wherein the heat recovery subsystem is arranged to transfer heat from the output to the steam subsystem.

7. The hydrogen production system of any of claims 1-6, further comprising a purification unit (102) arranged to remove one or more components from a feed stream (104) and produce a pre-treated stream (106).

8. The hydrogen production system of claim 7, wherein the reforming unit is arranged to receive the pre-treated stream.

9. A method of operating a hydrogen production system (100) comprising:
outputting, by a production subsystem (108) of the hydrogen production system, a combustible product comprising hydrogen, the production subsystem comprising a reformer unit (110) arranged to produce the combustible product;
heating, by a combustion subsystem (128) of the hydrogen production system, the production subsystem and a fluid heating vessel of a steam subsystem by combusting a fuel supplied to one or more burners of the combustion subsystem;
operating the hydrogen production system in a first operating mode in which the fuel supplied to the one or more burners comprises a fuel source other than the combustible product, the first operating mode implemented when a production rate of the combustible product is at or above a predefined threshold; and
operating the hydrogen production system in a second operating mode in which the fuel supplied to the one or more burners comprises a portion of the combustible product, the second operating mode implemented when the production rate of the combustible product is below the predefined threshold.

10. The method of claim 9, further comprising:
receiving, by a product purification unit, the output of the production subsystem; and
producing a purified product stream by removing one or more chemical components from the output of the production subsystem;

11. The method of claim 10, wherein a portion of the purified product stream is provided to the combustion subsystem in the second operating mode as part of the fuel supplied to the one or more burners.

12. The method of claim 9, wherein the fluid heating vessel of the steam subsystem is heated in the second operating mode at least in part by heat generated by the combustion subsystem combusting at least a portion of the combustible product output by the production subsystem.

13. The method of any of claims 9-12, wherein an output of the steam subsystem comprises an export steam to be transported to an external system.

14. The method of claim 11, further comprising transporting a remaining portion of the purified product stream to an external system.
